# EUROPÄISCHE PATENTANMELDUNG

(11) **EP 4 043 130 A1**
(43) Veröffentlichungstag der Anmeldung: **17.08.2022**
(21) Anmeldenummer: 21156179.0
(22) Anmeldetag: 10.02.2021
(51) Int. Cl.: B23C 5/08, B23C 5/28

(54) **SCHEIBENFRÄSER**

(71) Anmelder: CERATIZIT Austria Gesellschaft m.b.H., 6600 Reutte (AT)
(72) Erfinder: VENTURINI, Remus, 6600 Reutte (AT); GOEBERL, Christian, 6600 Reutte (AT)
(74) Vertreter: Ciesla, Dirk

(57) **Zusammenfassung**

Es wird ein Scheibenfräser (100) bereitgestellt, mit einem Grundkörper (10), der sich entlang einer vorgegebenen Rotationsachse (R) von einem ersten Ende (11) mit einer Schnittstelle zur Verbindung mit einem rotatorischen Antrieb zu einem freien zweiten Ende (12) erstreckt, an dem eine Anlagefläche (14) für einen scheibenförmigen Schneidenträger (20) ausgebildet ist, und einem an dem zweiten Ende (12) befestigten scheibenförmigen Schneidenträger (20), der sich mit einer dem Grundkörper (10) zugewandten ersten Hauptoberfläche (21) an der Anlagefläche (14) abstützt, dessen Außenumfang radial von dem Grundkörper (10) hervorsteht und der eine zentrale, den scheibenförmigen Schneidenträger (20) axial durchdringende Durchgangsöffnung (23) aufweist. In dem Grundkörper (10) ist eine Mehrzahl von Kühlmittelzufuhrkanälen (60) zur Zuführung von Kühlmittel zu dem zweiten Ende (12) des Grundkörpers (10) ausgebildet. In dem scheibenförmigen Schneidenträger (20) ist eine Mehrzahl von Kühlmittelverteilkanälen (50) zum Zuführen von Kühlmittel zu dem Außenumfang des Schneidenträgers (20) ausgebildet. Zumindest zwei der Mehrzahl von Kühlmittelverteilkanälen (50) zweigen von einer gemeinsamen Kühlmittelverteilkammer (70; 55, 61, 62) ab, die zwischen dem Grundkörper (10) und dem scheibenförmigen Schneidenträger (20) ausgebildet ist und in die zumindest zwei der Mehrzahl von Kühlmittelzufuhrkanälen (60) münden.

## Beschreibung

Die vorliegende Erfindung betrifft einen Scheibenfräser mit einem Grundkörper, der sich entlang einer vorgegebenen Rotationsachse von einem ersten Ende mit einer Schnittstelle zur Verbindung mit einem rotatorischen Antrieb zu einem freien zweiten Ende erstreckt, an dem eine Anlagefläche für einen scheibenförmigen Schneidenträger ausgebildet ist, und einem an dem zweiten Ende befestigten scheibenförmigen Schneidenträger.

Zum Ausbilden von Nuten bzw. Schlitzen in Werkstücken und zum Abtrennen von überwiegend metallischen Werkstoffen kommen häufig Scheibenfräser zum Einsatz, bei denen an einem Grundkörper, der zur Verbindung mit einem rotatorischen Antrieb ausgebildet ist, ein scheibenförmiger Schneidenträger angeordnet ist, der eine Mehrzahl von über den Umfang des scheibenförmigen Schneidenträgers verteilt angeordneten Schneiden aufweist. Die Schneiden können dabei insbesondere durch Schneideinsätze gebildet sein, die an entsprechenden Sitzen des Schneidenträgers gehalten und typischerweise aus einem härteren und verschleißbeständigeren Material als der Grundkörper und der scheibenförmige Schneidenträger gebildet sind. Z.B. können der Grundkörper und der scheibenförmige Schneidenträger aus Werkzeugstahl gebildet sein und die Schneiden aus Hartmetall, Cermet, Keramik oder einem ultraharten Werkstoff, wie z.B. PKD (polykristallinem Diamant) oder CBN (cubic boron nitride; kubischem Bornitrid).

DE 20 2017 105 606 U1 beschreibt einen Scheibenfräser mit einem Grundkörper und einem daran befestigten scheibenförmigen Schneidenträger. In dem Grundkörper ist eine Mehrzahl von Kühlmittelzufuhrkanälen ausgebildet, die jeweils in einer stirnseitigen länglichen Kühlmittelverteilkammer münden, über die Kühlmittel jeweils in mehrere Eintrittsöffnungen des scheibenförmigen Schneidenträgers übergeben wird.

Es ist Aufgabe der vorliegenden Erfindung, einen verbesserten Scheibenfräser bereitzustellen, bei dem die Kühlmittelzufuhr zu den Schneiden verbessert ist und bei dem die Gestaltungsfreiheit in Bezug auf die Ausgestaltung des scheibenförmigen Schneidenträgers vergrößert ist.

Wenn im Rahmen der folgenden Beschreibung die Begriffe axial, radial oder tangential verwendet werden, so beziehen sich diese Angaben jeweils auf die Rotationsachse des Scheibenfräsers, sofern sich nicht aus dem konkreten Zusammenhang eine andere Bedeutung ergibt.

Die Aufgabe wird durch einen Scheibenfräser nach Anspruch 1 gelöst. Vorteilhafte Weiterbildungen sind in den abhängigen Ansprüchen angegeben.

Der Scheibenfräser hat einen Grundkörper, der sich entlang einer vorgegebenen Rotationsachse von einem ersten Ende mit einer Schnittstelle zur Verbindung mit einem rotatorischen Antrieb zu einem freien zweiten Ende erstreckt, an dem eine Anlagefläche für einen scheibenförmigen Schneidenträger ausgebildet ist, und einen an dem zweiten Ende befestigten scheibenförmigen Schneidenträger, der sich mit einer dem Grundkörper zugewandten ersten Hauptoberfläche an der Anlagefläche abstützt, dessen Außenumfang radial von dem Grundkörper hervorsteht und der eine zentrale, den scheibenförmigen Schneidenträger axial durchdringende Durchgangsöffnung aufweist. In dem Grundkörper ist eine Mehrzahl von Kühlmittelzufuhrkanälen zur Zuführung von Kühlmittel zu dem zweiten Ende des Grundkörpers ausgebildet. In dem scheibenförmigen Schneidenträger ist eine Mehrzahl von Kühlmittelverteilkanälen zum Zuführen von Kühlmittel zu dem Außenumfang des Schneidenträgers ausgebildet. Zumindest zwei von der Mehrzahl von Kühlmittelverteilkanälen zweigen von einer gemeinsamen Kühlmittelverteilkammer ab, die zwischen dem Grundkörper und dem scheibenförmigen Schneidenträger ausgebildet ist und in die zumindest zwei der Mehrzahl von Kühlmittelzufuhrkanälen münden.

Da die gemeinsame Kühlmittelverteilkammer vorgesehen ist, in die zumindest zwei Kühlmittelzufuhrkanäle der Mehrzahl von Kühlmittelzufuhrkanälen münden, kann zu dem Außenumfang des Schneidenträgers selbst dann zuverlässig Kühlmittel zugeführt werden, wenn ein Kühlmittelzufuhrkanal durch z.B. Verunreinigungen verstopft sein sollte. Da die zentrale, den scheibenförmigen Schneidenträger axial durchdringende Durchgangsöffnung vorgesehen ist, kann der Scheibenfräser als ein sogenannter Aufsteck-Scheibenfräser ausgebildet werden, der ausgehend von dem freien zweiten Ende mittels einer zentralen Befestigungsschraube an einem rotatorischen Antrieb befestigt werden kann, an den der Scheibenfräser mit der an seinem ersten Ende ausgebildeten Schnittstelle angekoppelt wird. Bevorzugt kann vorgesehen sein, dass sämtliche Kühlmittelzufuhrkanäle der Mehrzahl von Kühlmittelzufuhrkanälen in eine gemeinsame Kühlmittelverteilkammer münden und dass sämtliche Kühlmittelverteilkanäle des Schneidenträgers von einer gemeinsamen Kühlmittelverteilkammer abzweigen.

Gemäß einer Weiterbildung erstreckt sich die gemeinsame Kühlmittelverteilkammer ringförmig um die Rotationsachse. In diesem Fall wird eine besonders gleichmäßige Verteilung des Kühlmittels zu allen Kühlmittelverteilkanälen erzielt.

Gemäß einer Weiterbildung weisen die Kühlmittelverteilkanäle jeweils einen im Inneren des Schneidenträgers verlaufenden ersten Kanalabschnitt, einen zu der Durchgangsöffnung und zu der ersten Hauptoberfläche offenen Eintrittsabschnitt und einen den Eintrittsabschnitt mit dem ersten Kanalabschnitt verbindenden Verbindungsabschnitt auf. In diesem Fall kann über den Eintrittsabschnitt ein relativ großer Querschnitt zur Übergabe von Kühlmittel in den scheibenartigen Schneidenträger bereitgestellt werden, sodass Strömungswiderstände gering gehalten werden können. Da der Verbindungsabschnitt vorgesehen ist, kann die axiale Höhe des zu der Durchgangsöffnung offenen Eintrittsabschnitts so gewählt werden, dass sie nur einen relativ geringen Teil der axialen Länge der Durchgangsöffnung beträgt und somit der Rest der axialen Länge der Durchgangsöffnung zur Abdichtung gegen unerwünschten Kühlmittelaustritt zur Verfügung steht.

Wenn eine axiale Höhe des zu der Durchgangsöffnung offenen Eintrittsabschnitts maximal ein Drittel der Dicke des scheibenförmigen Schneidenträgers an der Durchgangsöffnung beträgt, kann über den verbleibenden großen Anteil der axialen Höhe der Durchgangsöffnung zuverlässig eine Abdichtung gegenüber unerwünschtem Kühlmittelaustritt bereitgestellt werden. Die Dicke des Schneidenträgers an der Durchgangsöffnung kann z.B. der der Dicke des Schneidenträgers im Bereich von Sitzen für Schneideinsätze entsprechen. Insbesondere wenn der Schneidenträger in dem Bereich der Durchgangsöffnung abgestuft ausgebildet ist, sodass der sich an der Anlagefläche abstützende Bereich der ersten Hauptoberfläche als Vorsprung oder als Vertiefung ausgebildet ist, unterscheidet sich die Dicke des Schneidenträgers an der Durchgangsöffnung aber von der Dicke des Schneidenträgers an dessen Außenumfang.

Gemäß einer Weiterbildung weist die Kühlmittelverteilkammer einen schneidenträgerseitigen Abschnitt auf, der durch an die erste Hauptoberfläche und die Durchgangsöffnung angrenzende, sich zwischen den Eintrittsabschnitten der jeweiligen Kühlmittelverteilkanäle erstreckende Vertiefungen in dem scheibenförmigen Schneidenträger gebildet ist. In diesem Fall wird eine gleichmäßige Verteilung des Kühlmittels über den Umfang des Schneidenträgers erreicht und es kann insgesamt ein großer Strömungsquerschnitt für den Eintritt des Kühlmittels in die Kühlmittelverteilkanäle bereitgestellt werden.

Wenn eine axiale Höhe des schneidenträgerseitigen Abschnitts der Kühlmittelverteilkammer höchstens ein Drittel der Dicke des scheibenförmigen Schneidenträgers an der Durchgangsöffnung beträgt, steht auch in den Bereichen in Umfangsrichtung, in denen die Vertiefungen des schneidenträgerseitigen Abschnitts der Kühlmittelverteilkammer ausgebildet sind, ausreichend verbleibende axiale Höhe der Durchgangsöffnung zur Verfügung, um eine zuverlässige Abdichtung gegenüber unerwünschtem Kühlmittelaustritt zu gewährleisten. Bevorzugt kann die axiale Höhe des schneidenträgerseitigen Abschnitts der Kühlmittelverteilkammer, also die axiale Höhe der Vertiefungen, im Wesentlichen der axialen Höhe des zu der Durchgangsöffnung offenen Eintrittsabschnitts der Kühlmittelverteilkanäle entsprechen.

Gemäß einer Weiterbildung ist an dem zweiten Ende des Grundkörpers ein von der Anlagefläche axial vorspringender Zentrierzapfen ausgebildet und die Durchgangsöffnung in dem Schneidenträger ist an die Außenkontur des Zentrierzapfens angepasst. In diesem Fall kann unerwünschter Kühlmittelaustritt zuverlässig durch Zusammenwirken der Durchgangsöffnung mit der Außenkontur des Zentrierzapfens verhindert werden.

Gemäß einer Weiterbildung erstreckt sich durch den Zentrierzapfen eine an dem zweiten Ende offene Durchgangsbohrung. In diesem Fall kann die Befestigung des Scheibenfräsers an dem rotatorischen Antrieb in einfacher Weise durch Zugriff über die Durchgangsbohrung ausgehend von dem zweiten Ende erfolgen. Z.B. kann ein Eingriff in die Durchgangsbohrung mit einem Schraubwerkzeug erfolgen.

Bevorzugt liegt eine Innenumfangsfläche der Durchgangsöffnung des Schneidenträgers abdichtend an einer Außenumfangsfläche des Zentrierzapfens an. In diesem Fall kann unerwünschtes Austreten von Kühlmittel zuverlässig verhindert werden. Die Innenumfangsfläche der Durchgangsöffnung und die Außenumfangsfläche des Zentrierzapfens können zum Beispiel geschliffen sein, um eine abdichtende Passung zu ermöglichen. Bevorzugt sind die Außenumfangsfläche des Zentrierzapfens und die Innenumfangsfläche der Durchgangsöffnung rotationssymmetrisch um die Rotationsachse ausgebildet. Die Außenumfangsfläche des Zentrierzapfens und die Innenumfangsfläche der Durchgangsöffnung können z.B. konisch ausgebildet sein, bevorzugt kann die Innenumfangsfläche aber hohlzylindrisch und die Außenumfangsfläche entsprechend zylindrisch ausgebildet sein, da dies eine besonders einfache und kostengünstige Herstellung ermöglicht.

Gemäß einer Weiterbildung mündet die Mehrzahl von Kühlmittelzufuhrkanälen radial außerhalb des Zentrierzapfens in die gemeinsame Kühlmittelverteilkammer. In diesem Fall kann die gemeinsame Kühlmittelverteilkammer besonders einfach und kostengünstig so ausgebildet werden, dass Strömungswiderstände minimiert sind und das Kühlmittel zuverlässig und gleichmäßig über den gesamten Umfang verteilt wird.

Gemäß einer Weiterbildung weist die Kühlmittelverteilkammer einen ersten grundkörperseitigen Abschnitt auf, der durch eine um den Zentrierzapfen umlaufende, gegenüber der Anlagefläche vertieft ausgebildete Rille gebildet ist. In diesem Fall kann in besonders einfacher und kostengünstiger Weise ein ausreichender Querschnitt der Kühlmittelverteilkammer bereitgestellt werden und es wird eine gleichmäßige Verteilung des Kühlmittels über den gesamten Umfang des Zentrierzapfens erzielt.

Gemäß einer Weiterbildung weist die Kühlmittelverteilkammer einen zweiten grundkörperseitigen Abschnitt auf, der durch einen an dem Zentrierzapfen eingebrachten, umlaufenden Freistich gebildet ist. In diesem Fall kann der Querschnitt der Kühlmittelverteilkammer in besonders einfacher Weise vergrößert werden, sodass Strömungswiderstände niedrig gehalten werden können. Der Freistich kann bevorzugt in dem Bereich zwischen der abdichtenden Außenumfangsfläche des Zentrierzapfens und der Anlagefläche für den scheibenförmigen Schneidenträger ausgebildet sein.

Gemäß einer Weiterbildung weist der Schneidenträger eine Mehrzahl von über den Umfang des scheibenförmigen Schneidenträgers verteilten Sitzen zur Aufnahme von auswechselbaren Schneideinsätzen auf. In diesem Fall kann der Schneidenträger kostengünstig z.B. aus Werkzeugstahl gefertigt werden und nur die die mit dem zu bearbeitenden Werkstück in Kontakt tretenden Schneiden aufweisenden Schneideinsätze müssen aus einem besonders harten und verschleißbeständigen Material, wie z.B. Hartmetall (cemented carbide), gebildet werden.

Gemäß einer Weiterbildung sind die Sitze dazu ausgebildet, auswechselbare Schneideinsätze derart aufzunehmen, dass diese jeweils axial beidseitig von dem scheibenförmigen Schneidenträger vorstehen. In diesem Fall können mit dem Scheibenfräser auch relativ schmale Schlitze ausgebildet werden und/oder es kann ein Abtrennen von Material mit einer relativ geringen Schlitzbreite erfolgen.

Wenn der Scheibenfräser eine Mehrzahl von an den Sitzen befestigten auswechselbaren Schneideinsätzen hat, die den axial am weitesten von dem Grundkörper hervorstehenden Bereich des Scheibenfräsers bilden, können z.B. auch Nuten in einem Hohlraum sehr nah an einem Boden des Hohlraums ausgebildet werden.

Weitere Vorteile und Zweckmäßigkeiten der Erfindung ergeben sich anhand der nachfolgenden Beschreibung von einem Ausführungsbeispiel unter Bezugnahme auf die beigefügten Figuren.
- Fig. 1:: ist eine schematische perspektivische Darstellung eines Scheibenfräsers gemäß einer Ausführungsform;
- Fig. 2:: ist eine Fig. 1 entsprechende perspektivische Darstellung des Scheibenfräser mit einer Mehrzahl von an jeweiligen Sitzen befestigten auswechselbaren Schneideinsätzen;
- Fig. 3:: ist eine schematische Explosionsdarstellung des Scheibenfräsers aus Fig. 2;
- Fig. 4:: ist eine Aufsicht auf das freie zweite Ende des Grundkörpers bei der Ausführungsform;
- Fig. 5:: ist eine Darstellung eines Schnittes entlang der Linie C-C von Fig. 4;
- Fig. 6:: ist eine vergrößerte Darstellung des Details D aus Fig. 5;
- Fig. 7:: ist eine schematische perspektivische Ansicht der Unterseite des scheibenförmigen Schneidenträgers mit daran angeordneten Schneideinsätzen;
- Fig. 8:: ist eine schematische perspektivische Darstellung des scheibenförmigen Schneidenträgers mit gestrichelt dargestellten verdeckten Linien;
- Fig. 9:: ist eine schematische perspektivische Ansicht der Unterseite des Schneidenträgers mit gestrichelt dargestellten verdeckten Linien;
- Fig. 10:: ist eine vergrößerte Darstellung des in Fig. 9 durch einen Kreis gekennzeichneten Details E;
- Fig. 11:: ist eine schematische Darstellung des Schneidenträgers von unten mit gestrichelt dargestellten verdeckten Linien;
- Fig. 12:: ist eine Schnittdarstellung entlang der Linie D-D in Fig. 11;
- Fig. 13:: ist eine schematische Ansicht des Scheibenfräsers mit Blick auf das freie zweite Ende mit gestrichelt dargestellten verdeckten Linien;
- Fig. 14:: ist eine Darstellung eines Schnittes entlang der Linie F-F von Fig. 13;
- Fig. 15:: ist eine vergrößerte Darstellung eines in Fig. 14 eingekreisten Details G;
- Fig. 16:: ist eine Fig. 13 entsprechende Ansicht;
- Fig. 17:: ist eine Darstellung eines Schnittes entlang der Linie H-H von Fig. 16;
- Fig. 18:: ist eine vergrößerte Darstellung des in Fig. 17 eingekreisten Details I;
- Fig. 19:: ist eine Fig. 13 entsprechende Darstellung;
- Fig. 20:: ist eine Darstellung eines Schnittes entlang der Linie J-J von Fig. 19;
- Fig. 21:: ist eine vergrößerte Darstellung des in Fig. 20 eingekreisten Details;
- Fig. 22:: ist eine schematische perspektivische Darstellung eines scheibenförmigen Schneidenträgers gemäß einer Abwandlung; und
- Fig. 23:: ist eine schematische perspektivische Darstellung des Schneidenträger gemäß der Abwandlung mit gestrichelt dargestellten verdeckten Linien.

### AUSFÜHRUNGSFORM

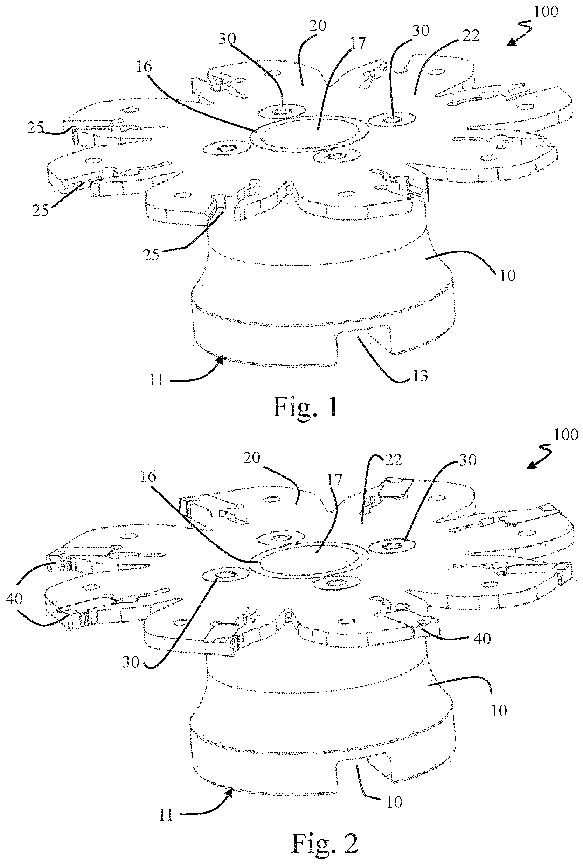

Eine Ausführungsform des Scheibenfräsers wird im Folgenden unter Bezugnahme auf die Fig. 1 bis Fig. 21 eingehender beschrieben.

Bei der konkreten Ausführungsform ist der Scheibenfräser 100 als ein sogenannter Aufsteck-Scheibenfräser zur stirnseitigen Montage an einem rotatorischen Antrieb einer Bearbeitungsmaschine ausgebildet.

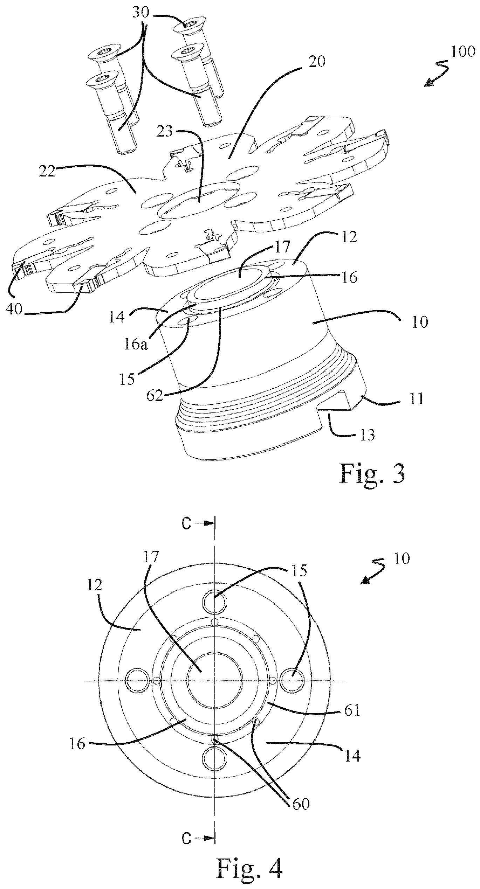

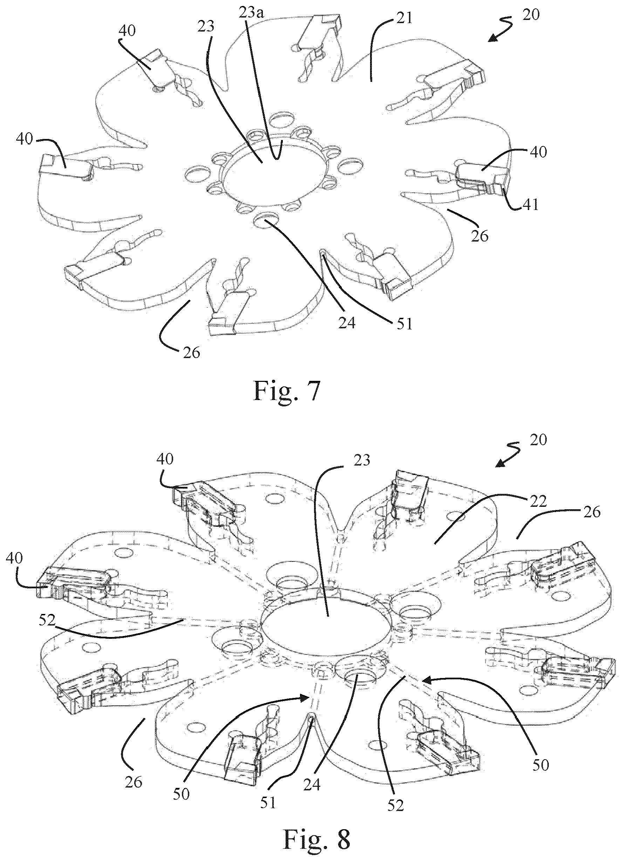

Der Scheibenfräser 100 hat einen Grundkörper 10, der insbesondere in den Fig. 4, Fig. 5 und Fig. 6 eingehender gezeigt ist, und einen scheibenförmigen Schneidenträger 20, der insbesondere in den Fig. 7 bis Fig. 10 eingehender gezeigt ist.

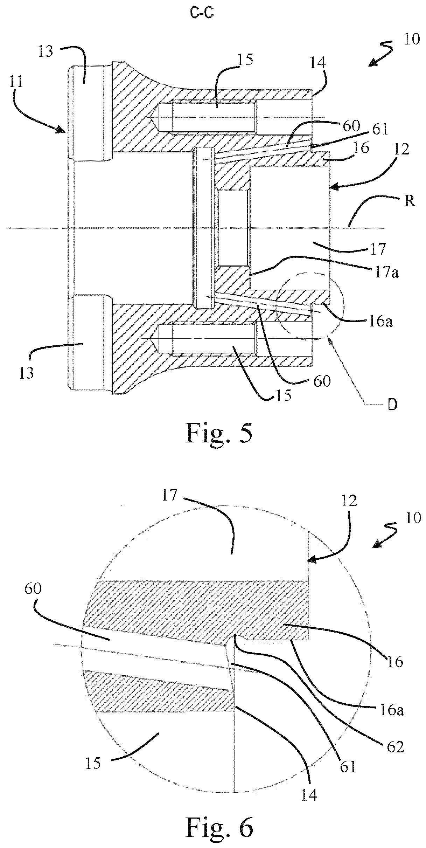

Der Grundkörper 10 erstreckt sich entlang einer vorgegebenen Rotationsachse R von einem ersten Ende 11 zu einem freien zweiten Ende 12, wie insbesondere in Fig. 5 zu sehen ist. An dem ersten Ende 11 ist eine Schnittstelle zur Verbindung mit einem rotatorischen Antrieb ausgebildet. Bei dem konkret dargestellten Ausführungsbeispiel sind an dem ersten Ende 11 insbesondere zwei Ausnehmungen 13 zum Zusammenwirken mit entsprechenden Mitnehmern an dem rotatorischen Antrieb zur Drehmomentübertragung ausgebildet.

An dem freien zweiten Ende 12 des Grundkörpers 10 ist eine Anlagefläche 14 zur Anlage des scheibenförmigen Schneidenträgers 20 ausgebildet. Die Anlagefläche 14 ist bei der Ausführungsform durch eine ringförmig ausgebildete ebene Stirnseite des Grundkörpers 10 gebildet, die sich in einer Ebene senkrecht zu der Rotationsachse R erstreckt.

Ausgehend von dem zweiten Ende 12 des Grundkörpers 10 ist in der Anlagefläche 14 eine Mehrzahl von Gewindebohrungen 15 zur Aufnahme von Befestigungsschrauben 30 zur Befestigung des scheibenförmigen Schneidenträgers 20 an dem Grundkörper 10 vorgesehen. Obwohl bei der konkret dargestellten Ausführungsform insgesamt vier solche Gewindebohrungen 15 und vier Befestigungsschrauben 30 vorgesehen sind, kann die Anzahl der Befestigungsschrauben 30 und Gewindebohrungen 15 auch kleiner als vier oder größer als vier sein.

An dem zweiten Ende 12 des Grundkörpers 10 ist ein gegenüber der Anlagefläche 14 axial vorspringender Zentrierzapfen 16 ausgebildet, dessen Funktion noch eingehender beschrieben wird. Wie insbesondere in den Fig. 3 und Fig. 5 zu sehen ist, hat der Zentrierzapfen 16 eine zylindrische Außenumfangsfläche 16a.

Wie insbesondere in Fig. 5 zu sehen ist, ist in dem Grundkörper 10 eine Durchgangsbohrung 17 ausgebildet, die sich entlang der Rotationsachse R von dem zweiten Ende 12 bis zu dem ersten Ende 11 erstreckt. Die Durchgangsbohrung 17 erstreckt sich dabei insbesondere auch durch den Zentrierzapfen 16 und ist an dem zweiten Ende 12 offen ausgebildet. Die Durchgangsbohrung 17 ist dazu ausgebildet, ein (nicht dargestelltes) Befestigungsmittel aufzunehmen, mittels dem der Scheibenfräser 100 mit seiner an dem ersten Ende 11 vorgesehenen Schnittstelle an dem rotatorischen Antrieb befestigt werden kann. Die Innenwand der Durchgangsbohrung 17 ist insbesondere abgestuft ausgebildet und mit einer sich im Wesentlichen senkrecht zu der Rotationsachse R erstreckenden Schulter 17a versehen, an der sich ein Kopf des Befestigungsmittels abdichtend abstützen kann, um den Scheibenfräser 100 an dem rotatorischen Antrieb zu befestigen. Die Bedienung des Befestigungsmittels kann dabei ausgehend von dem freien zweiten Ende 12 des Grundkörpers 10 bzw. des Scheibenfräsers 100 erfolgen.

Im Folgenden wird der scheibenförmige Schneidenträger 20 eingehender beschrieben. Wie insbesondere in den Fig. 1 bis Fig. 3, Fig. 7 und Fig. 8 zu sehen ist, hat der scheibenförmige Schneidenträger 20 die Form einer relativ dünnen Scheibe mit einer ersten Hauptoberfläche 21 und einer dazu parallelen zweiten Hauptoberfläche 22. Im zusammengebauten Zustand des Scheibenfräsers 100 erstrecken sich die ersten Hauptoberfläche 21 und die zweite Hauptoberfläche 22 jeweils senkrecht zu der Rotationsachse R. Die erste Hauptoberfläche 21 ist dazu ausgebildet, dem Grundkörper 10 zugewandt angeordnet zu werden sich mit einem ringförmigen Bereich an der Anlagefläche 14 abzustützen. Der ringförmige Bereich kann z.B. bevorzugt eben mit dem Rest der ersten Hauptoberfläche 21 ausgebildet sein. Es ist jedoch auch möglich, den ringförmigen Bereich gegenüber dem Rest der ersten Hauptoberfläche 21 abgestuft auszubilden, insbesondere z.B. als ein Vorsprung. Die zweite Hauptoberfläche 22 ist dazu ausgebildet, von dem Grundkörper 10 abgewandt angeordnet zu werden. Die Dicke des scheibenförmigen Schneidenträgers 20 und die axiale Höhe des Zentrierzapfens 16 sind so aufeinander angepasst, dass der Zentrierzapfen 16 im zusammengebauten Zustand des Scheibenfräsers 100 nicht stirnseitig hervorsteht, sondern im Wesentlichen mit der zweiten Hauptoberfläche 22 des Schneidenträgers 20 fluchtet, wie insbesondere in den Fig. 1 und Fig. 2 zu sehen ist.

Wie insbesondere in den Fig. 7 und Fig. 8 zu sehen ist, ist zentral in dem Schneidenträger 20 eine den Schneidenträger 20 von der zweiten Hauptoberfläche 22 zu der ersten Hauptoberfläche 21 durchdringende Durchgangsöffnung 23 ausgebildet. Die Durchgangsöffnung 23 erstreckt sich koaxial zu der Rotationsachse R und weist eine Innenumfangsfläche 23a auf, die passgenau an die Form der Außenumfangsfläche 16a des Zentrierzapfens 16 angepasst ist. Bei dem konkret dargestellten Ausführungsbeispiel hat die Innenumfangsfläche 23a eine hohlzylindrische Form. Die Innenumfangsfläche 23a des Schneidenträgers 20 und die Außenumfangsfläche 16a des Zentrierzapfens 16 sind derart aufeinander abgestimmt, dass diese gegenüber Kühlmittel abdichtend aneinander anliegen, wie nachfolgend noch eingehender beschrieben wird.

Radial außerhalb der Durchgangsöffnung 23 sind in dem Schneidenträger 20 Bohrungen 24 zur Aufnahme der Befestigungsschrauben 30 ausgebildet, wie insbesondere in den Fig. 7 und Fig. 8 zu sehen ist. Wie insbesondere in Fig. 8 zu sehen ist, sind die Bohrungen 24 angrenzend an die zweite Hauptoberfläche 22 angefast ausgebildet, sodass die Köpfe der Befestigungsschrauben 30 im montierten Zustand, der in den Fig. 1 und Fig. 2 zu sehen ist, nicht von der zweiten Hauptoberfläche 22 hervorstehen.

Der Schneidenträger 20 steht radial von dem Grundkörper 10 hervor und weist einen wesentlich größeren Außendurchmesser als der Grundkörper 10 auf. Über den Außenumfang des Schneidenträgers 20 verteilt ist eine Mehrzahl von Sitzen 25 zur Aufnahme von auswechselbaren Schneideinsätzen 40 ausgebildet, wie insbesondere in Fig. 1 zu sehen ist. Obwohl bei dem konkret dargestellten Ausführungsbeispiel eine Realisierung gezeigt ist, bei der insgesamt acht Sitze 25 mit daran angeordneten Schneideinsätzen 40 vorgesehen sind, können z.B. auch weniger oder mehr als acht Sitze 25 vorgesehen sein. Die Anzahl der Sitze kann dabei insbesondere z.B. abhängig von dem Außendurchmesser des Schneidenträgers 20 variiert werden. Die Sitze 25 sind derart ausgebildet, dass die daran angeordneten Schneideinsätze 40 jeweils mit einer Schneidkante 41 radial von dem Schneidenträger 20 hervorstehen.

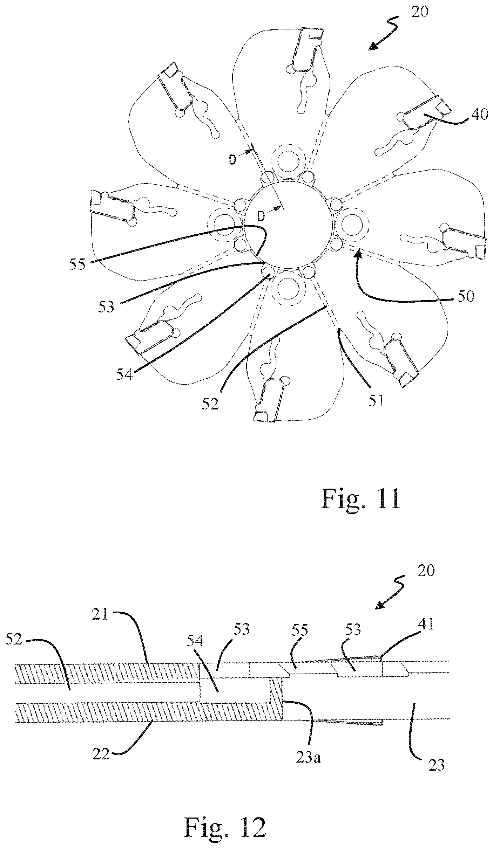

Die Sitze 25 sind bei der Ausführungsform derart ausgebildet, dass die Schneidkanten 41 der Schneideinsätze 40 jeweils axial beidseitig von dem Schneidenträger 20 hervorstehen, d.h. sowohl axial über die zweite Hauptoberfläche 22 als auch axial über die erste Hauptoberfläche 21 hervorstehen, wie insbesondere in Fig. 12 zu sehen ist. Die Breite der Schneidkanten in der axialen Richtung beträgt dabei zwischen 1,5 mm und 12 mm, bevorzugt zwischen 2 mm und 10 mm. Die Dicke des Schneidenträgers 20, also der Abstand zwischen der ersten Hauptoberfläche 21 und der zweiten Hauptoberfläche 22 ist etwas, z.B. im Zehntelmillimeterbereich, kleiner als die Breite der Schneidkanten, um ausreichendes Freigehen zu gewährleisten.

Die Schneidkanten 41 bilden bei dem Scheibenfräser 100 die axial an dem zweiten Ende 22 am weitesten hervorstehenden Bereiche des gesamten Scheibenfräsers 100.

Bei dem konkret dargestellten Ausführungsbeispiel sind die auswechselbaren Schneideinsätze 40 über elastisch auslenkbare, in dem Material des Schneidenträgers 20 ausgebildete Klemmfinger an den Sitzen 25 gehalten. Benachbart zu den Sitzen 25 sind an dem Außenumfang des Schneidenträgers 20 jeweils Spannuten 26 ausgebildet, wie insbesondere in den Fig. 7 und Fig. 8 zu sehen ist.

Der Scheibenfräser 100 gemäß der Ausführungsform weist eine interne Kühlmittelversorgungsstruktur zur gezielten Zuführung von Kühlmittel in den Bereich der Sitze 25 auf. Die Kühlmittelversorgungsstruktur ist derart ausgebildet, dass jeweils den Sitzen 25 bzw. den daran befestigten Schneideinsätzen 40 zugeordnete Kühlmittelaustritte vorgesehen sind. Die Ausgestaltung der internen Kühlmittelversorgungsstruktur wird im Folgenden eingehender beschrieben.

Zunächst werden die in dem scheibenförmigen Schneidenträger 20 ausgebildeten Kühlmittelverteilkanäle 50 unter Bezug auf die Fig. 7 bis Fig. 10 eingehender beschrieben.

In dem Schneidenträger 20 ist eine Mehrzahl von individuellen Kühlmittelverteilkanälen 50 ausgebildet. Bei der Ausführungsform entspricht die Anzahl der Kühlmittelverteilkanäle 50 der Anzahl der Sitze 25 für auswechselbare Schneideinsätze 40, sodass jedem Sitz 25 ein individueller Kühlmittelverteilkanal 50 zugeordnet ist.

Bei dem konkret dargestellten Ausführungsbeispiel weist jeder Kühlmittelverteilkanal 50 eine Austrittsöffnung 51 auf, über die aus dieser austretendes Kühlmittel in den Bereich eine Sitzes 25 bzw. eines dort angeordneten Schneideinsatzes 40 zugeführt werden kann. Obwohl bei dem konkret dargestellten Beispiel eine Realisierung gezeigt ist, bei der die Austrittsöffnungen 51 jeweils im Bereich des tiefsten Punktes der Spannut 26 angeordnet sind, sind auch andere Ausgestaltungen möglich. Z.B. können die Austrittsöffnungen 51 näher zu den Spanflächen der jeweiligen Schneideinsätze 40 angeordnet sein oder benachbart zu den Freiflächen der jeweiligen Schneideinsätze 40. Obwohl die Kühlmittelverteilkanäle 50 bei dem dargestellten Ausführungsbeispiel jeweils nur eine Austrittsöffnung 51 aufweisen, kann z.B. auch vorgesehen werden, dass sich die Kühlmittelverteilkanäle 50 verzweigen und jeweils mehrere Austrittsöffnungen 51 aufweisen, wie z.B. eine in Richtung Spanfläche gerichtete Austrittsöffnung und eine in Richtung Freifläche gerichtete Austrittsöffnung.

Die Kühlmittelverteilkanäle 50 in dem Schneidenträger 20 weisen jeweils einen sich zu der zugehörigen Austrittsöffnung 51 verlaufenden ersten Kanalabschnitt 52 auf, der im Inneren des Schneidenträgers 20 verläuft, wie insbesondere in Fig. 7 zu sehen ist. Dieser erste Kanalabschnitt 52 verläuft derart im Inneren des Schneidenträgers 20, dass er sowohl auf der Seite der ersten Hauptoberfläche 21 als auch auf der Seite der zweiten Hauptoberfläche 22 geschlossen ausgebildet ist. Bevorzugt kann der erste Kanalabschnitt 52 zumindest im Wesentlichen mittig zwischen der ersten Hauptoberfläche 21 und der zweiten Hauptoberfläche 22 des Schneidenträgers 20 ausgebildet sein.

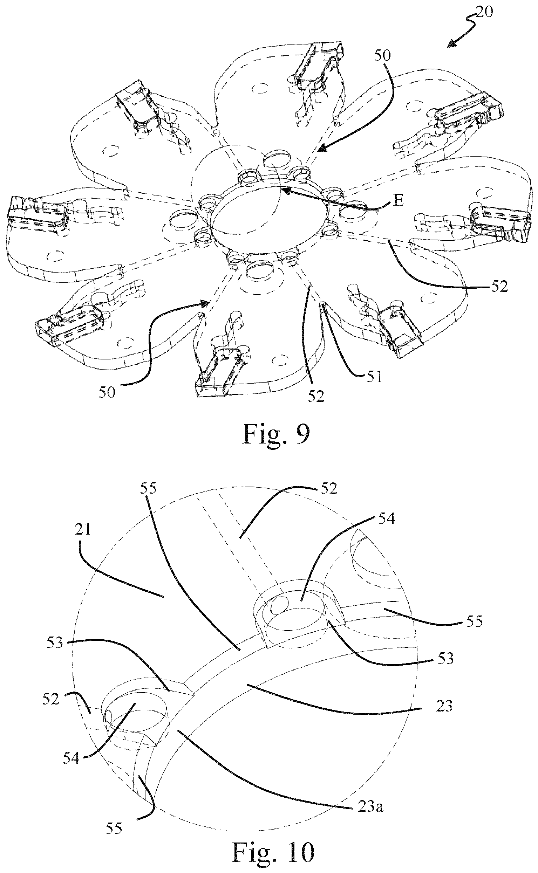

Wie insbesondere aus der Detailansicht in Fig. 10 zu sehen ist, die eine Vergrößerung des eingekreisten Details E in Fig. 9 ist, weisen die Kühlmittelverteilkanäle 50 jeweils in dem radial innenliegenden Bereich des Schneidenträgers 20 einen Eintrittsbereich 53 auf, der gegenüber der ersten Hauptoberfläche 21 und gegenüber der Durchgangsöffnung 23 offen ausgebildet ist. Der Eintrittsbereich 53 erstreckt sich ausgehend von der ersten Hauptoberfläche 21 des Schneidenträgers 20 nur über einen Teil der Dicke des Schneidenträgers 20 in dem Bereich der Durchgangsöffnung 23, insbesondere über höchstens ein Drittel der Dicke des scheibenförmigen Schneidenträgers 20 an der Durchgangsöffnung 23. Mit anderen Worten beträgt die axiale Höhe des Eintrittsbereichs 53 höchstens ein Drittel der Dicke des Schneidenträgers 20 an der Durchgangsöffnung 23. Der Eintrittsbereich 53 kann z.B. durch eine Ausfräsung ausgehend von der ersten Hauptoberfläche 21 und ausgehend von der Durchgangsöffnung 23 ausgebildet sein.

Wie insbesondere in Fig. 10 und Fig. 12 zu sehen ist, ist der Eintrittsbereich 53 über einen Verbindungsabschnitt 54 mit dem ersten Kanalabschnitt 52 verbunden. Der Verbindungsabschnitt 54 kann z.B. insbesondere durch eine Querbohrung ausgehend von der ersten Hauptoberfläche 21 gebildet sein, die den zu der ersten Hauptoberfläche 21 offenen Eintrittsbereich 53 mit dem weiter im Inneren des Schneidenträgers 20 befindlichen ersten Kanalabschnitt 52 verbindet. Der Verbindungsabschnitt 54 ist in Richtung der Durchgangsöffnung 23 geschlossen, sodass sich die zu der Außenumfangsfläche 16a des Zentriervorsprungs 16 abdichtende Innenumfangsfläche 23a in dem Bereich der Eintrittsbereiche 53 über mindestens zwei Drittel der Dicke des Schneidenträgers 20 im Bereich der Durchgangsöffnung 23 erstreckt. Diese Merkmale sind insbesondere auch in der Schnittdarstellung von Fig. 12 zu sehen, einer Schnittdarstellung in dem Bereich eines Eintrittsbereichs 53.

Wie ebenfalls in Fig. 10 und Fig. 12 zu sehen ist, sind zwischen benachbarten Eintrittsbereichen 53 benachbarter Kühlmittelverteilkanäle 50 an die erste Hauptoberfläche 21 und an die Durchgangsöffnung 23 angrenzende Vertiefungen 55 ausgebildet, deren Funktion noch eingehender erläutert werden wird. Die Vertiefungen 55 sind bei der Ausführungsform durch eine Fasenfläche bzw. Abschrägung gebildet, die die benachbarten Eintrittsbereiche 53 jeweils verbindet. In dieser Weise können die Vertiefungen 55 besonders einfach durch Ausbilden einer umlaufenden Fase vor oder nach dem Ausbilden der Eintrittsbereiche 53 erzeugt werden. In der Dickenrichtung des Schneidenträgers 20 erstrecken sich auch die Vertiefungen 55 höchstens über ein Drittel der Dicke des Schneidenträgers 20 im Bereich der Durchgangsöffnung 23, sodass sich die abdichtende Innenumfangsfläche 23a auch in dem Bereich der Vertiefungen 55 über mindestens zwei Drittel der Dicke des Scheibenträgers 20 dort erstreckt.

In dem Grundkörper 10 ist eine Mehrzahl von Kühlmittelzufuhrkanälen 60 ausgebildet, deren Struktur im Folgenden unter Bezug auf die Fig. 4, Fig. 5 und Fig. 6 eingehender beschrieben wird. Obwohl in Bezug auf das konkret dargestellte Ausführungsbeispiel insgesamt acht solche Kühlmittelzufuhrkanäle 60 gezeigt sind, was der Anzahl der Kühlmittelverteilkanäle 50 in dem Schneidenträger 20 entspricht, kann die Anzahl der Kühlmittelzufuhrkanäle 60 auch mehr oder weniger als acht betragen und muss insbesondere nicht mit der Anzahl der Kühlmittelverteilkanäle 50 bzw. der Anzahl der Sitze 25 an dem Schneidenträger 20 übereinstimmen.

Wie insbesondere in Fig. 5 zu sehen ist, zweigen die Kühlmittelzufuhrkanäle 60 bei dem dargestellten Ausführungsbeispiel ausgehend von der Durchgangsbohrung 17 ab, über die sie ausgehend von der Seite des rotatorischen Antriebs mit Kühlmittel versorgt werden. Wie insbesondere in den Fig. 4 und Fig. 5 zu sehen ist, münden die Kühlmittelzufuhrkanäle 60 radial außerhalb des Zentrierzapfens 16 und radial innerhalb der Position der Gewindebohrungen 15 an dem zweiten Ende des Grundkörpers 10. Die Mündungen der Kühlmittelzufuhrkanäle 60 sind dabei ringförmig über den Außenumfang des Zentrierzapfens 16 verteilt angeordnet, d.h. die Mündungen sind auf einem sich um den Zentrierzapfen 16 ringförmig erstreckenden Bereich angeordnet.

In dem ringförmigen Bereich, in dem die Kühlmittelzufuhrkanäle 60 münden, ist um den Zentrierzapfen 16 umlaufend eine gegenüber der Anlagefläche 14 vertieft ausgebildete Rille 61 gebildet, wie insbesondere in den Fig. 4 und Fig. 6 zu sehen ist. Die Rille 61 ist bei dem konkret dargestellten Ausführungsbeispiel als eine in Richtung des Zentrierzapfens 16, also nach radial innen, sich vertiefende Einsenkung an der Anlagefläche 14 ausgebildet, was eine besonders einfache Herstellung ermöglicht. Es sind jedoch auch andere Formen der ringförmig umlaufenden Rille 61 möglich.

Wie ebenfalls am besten in Fig. 6 zu sehen ist, ist an dem Zentrierzapfen 16 in dem Bereich zwischen der Außenumfangsfläche 16a und der in der Anlagefläche 14 ausgebildeten ringförmigen Rille 61 ein umlaufender Freistich 62 eingebracht, sodass der Außenumfang des Zentrierzapfens 16 in diesem Bereich lokal verringert ist. Mit anderen Worten ist durch diesen umlaufenden Freistich 62 an dem an die Anlagefläche 14 angrenzenden Bereich des Zentrierzapfens 16 eine ringförmige Vertiefung ausgebildet.

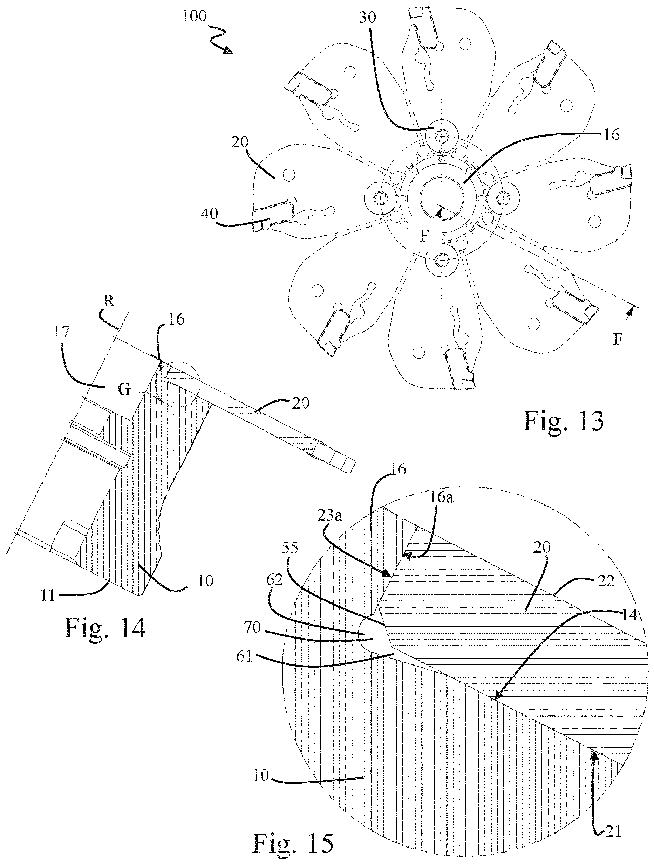

Im Folgenden wird unter Bezug auf die Fig. 13 bis Fig. 21 das Zusammenwirken des Grundkörpers 10 und des Schneidenträgers 20 unter Ausbildung einer internen Kühlmittelversorgungsstruktur beschrieben.

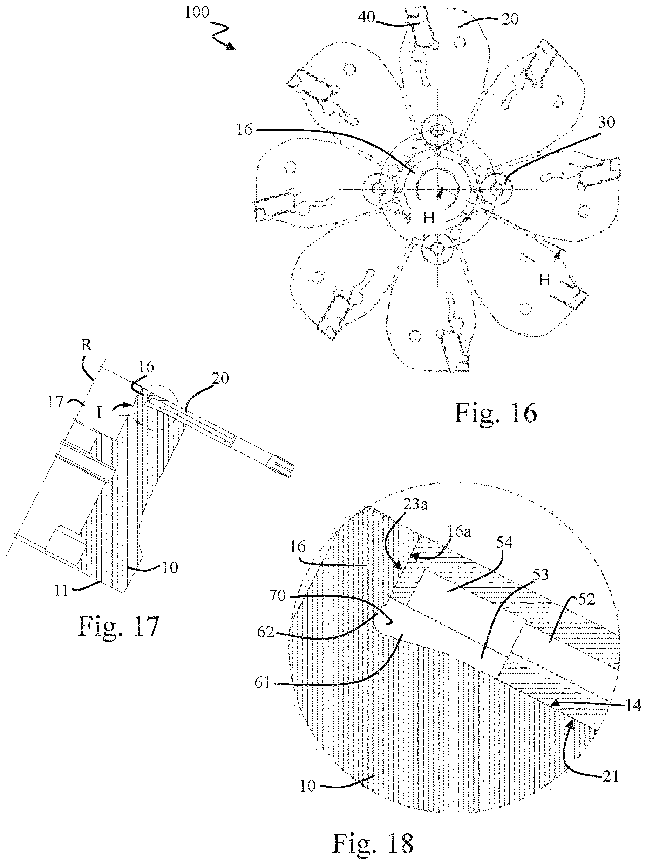

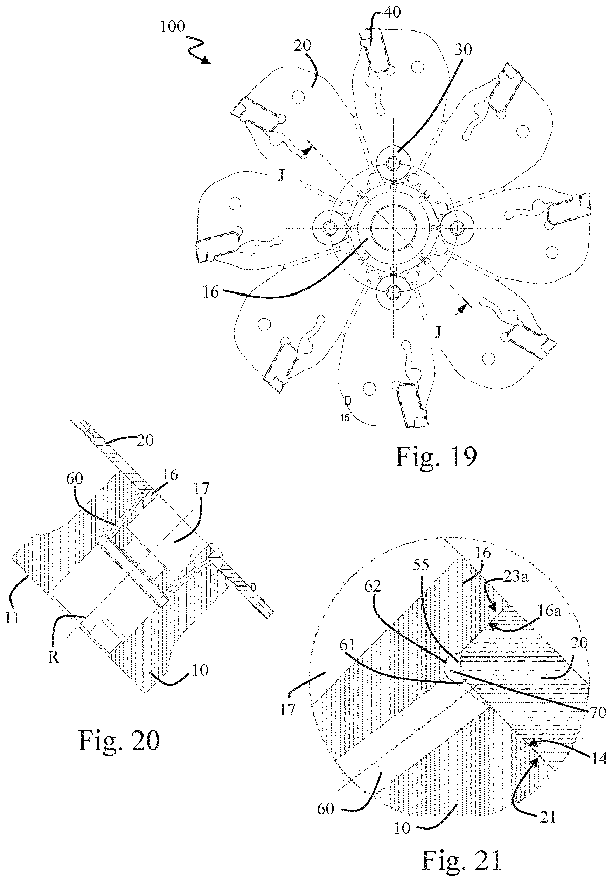

Wenn der Schneidenträger 20 an dem Grundkörper 10 befestigt ist, liegt ein Bereich der ersten Hauptoberfläche 21 des Schneidenträgers 20 an der Anlagefläche 14 des Grundkörpers 10 an und die Außenumfangsfläche 16a des Zentrierzapfens 16 liegt abdichtend an der Innenumfangsfläche 23a der Durchgangsöffnung 23 an. Wie sich aus der Zusammenschau der Figuren ergibt, zeigen Fig. 15, Fig. 18 und Fig. 21 jeweils Detaildarstellungen von Schnitten in Ebenen, die die Rotationsachse R enthalten, jedoch an verschiedenen Stellen in Umfangsrichtung. Fig. 15 ist ein Detail eines Schnittes in einem Bereich, in dem weder ein Kühlmittelzufuhrkanal 60 mündet, noch sich ein Eintrittsbereich 53 eines Kühlmittelverteilkanals 50 befindet. Fig. 18 ist ein Detail eines Schnittes in einem Bereich, in dem sich ein Eintrittsbereich 53 eines Kühlmittelverteilkanals 50 befindet. Fig. 21 ist ein Detail eines Schnittes in einem Bereich, in dem ein Kühlmittelzufuhrkanal 60 mündet.

Wie aus einer Zusammenschau der Fig. 15, Fig. 18 und Fig. 21 ersichtlich ist, ist in dem Bereich zwischen dem Grundkörper 10 und dem Schneidenträger 20 eine Kühlmittelverteilkammer 70 gebildet. Die Kühlmittelverteilkammer 70 ist durch das Zusammenwirken der ringförmigen Rille 61 in der Auflagefläche 14, des umlaufenden Freistichs 62 an dem Zentrierzapfen 16 und der Vertiefungen 55 an dem Schneidenträger 20 gebildet. Diese gemeinsame Kühlmittelverteilkammer 70 erstreckt sich somit ringförmig um die Rotationsachse R bzw. den Zentrierzapfen 16. Die gemeinsame Kühlmittelverteilkammer 70 hat folglich einen schneidenträgerseitigen Abschnitt, der durch die Vertiefungen 55 an dem Schneidenträger 20 gebildet ist. Die gegenüber der Anlagefläche 14 vertieft ausgebildete Rille 61 bildet einen ersten grundkörperseitigen Abschnitt der gemeinsamen Kühlmittelverteilkammer 70. Der umlaufende Freistich 62 an dem Zentrierzapfen 16 bildet einen zweiten grundkörperseitigen Abschnitt der gemeinsamen Kühlmittelverteilkammer 70.

Wie in Fig. 21 zu sehen ist, münden die Kühlmittelzufuhrkanäle 60 jeweils in die gemeinsame Kühlmittelverteilkammer 70, die in diesem Bereich durch den Freistich 62, die Rille 61 und die Vertiefung 55 gebildet ist. Wie in Fig. 15 zu sehen ist, kann das Kühlmittel dann über die Kühlmittelverteilkammer 70 in Umfangsrichtung verteilt werden. In dem Bereich, in dem sich die Eintrittsbereiche 53 der jeweiligen Kühlmittelverteilkanäle 50 befinden, kann das Kühlmittel dann aus der gemeinsamen Kühlmittelverteilkammer 70 in die jeweiligen Kühlmittelverteilkanäle 50 eintreten, wie in Fig. 18 zu sehen ist.

Im Betrieb des Scheibenfräsers 100 wird Kühlmittel von dem ersten Ende 11 des Grundkörpers 10 aus über die Durchgangsbohrung 17 zu den Kühlmittelzufuhrkanälen 60 zugeführt. Ein axialer stirnseitiger Austritt des Kühlmittels an dem zweiten Ende 12 über die Durchgangsbohrung 17 wird über das in dieser aufgenommene (nicht dargestellte) Befestigungsmittel für den Grundkörper an dem rotatorischen Antrieb unterbunden. Über die Kühlmittelzufuhrkanäle 60 wird das Kühlmittel zu der gemeinsamen Kühlmittelverteilkammer 70 zugeführt und über diese in Umfangsrichtung zu den jeweiligen Kühlmittelverteilkanälen 50 verteilt. Ein stirnseitiges Austreten von Kühlmittel an dem zweiten Ende 12 zwischen dem Zentrierzapfen 16 und der Durchgangsöffnung 23 ist dadurch unterbunden, dass die Innenumfangsfläche 23a der Durchgangsöffnung 23 an der entsprechenden Außenumfangsfläche 16a des Zentrierzapfens 16 abdichtend anliegt. Über die Kühlmittelverteilkanäle 50 in dem Schneidenträger 20 wird das Kühlmittel gezielt in den Bereich der jeweiligen Sitze 25 zugeführt.

Aufgrund der ringförmigen Ausgestaltung der gemeinsamen Kühlmittelverteilkammer 70 und dadurch, dass sich diese radial innerhalb der Gewindebohrungen 15 und Befestigungsschrauben 30 befindet, ist die Verteilung der Eintrittsbereiche 53 der Kühlmittelverteilkanäle 50 über den Umfang der Durchgangsöffnung 23 unabhängig von der Anzahl und der Verteilung der Mündungen der Kühlmittelzufuhrkanäle 60 über den Umfang des Zentrierzapfens 16. In dieser Weise können an demselben Grundkörper 10 verschiedene Schneidenträger 20 zum Einsatz kommen, die sich z.B. in ihrem Außendurchmesser und/oder der Anzahl der Sitze 25 und der Kühlmittelverteilkanäle 50 voneinander unterscheiden.

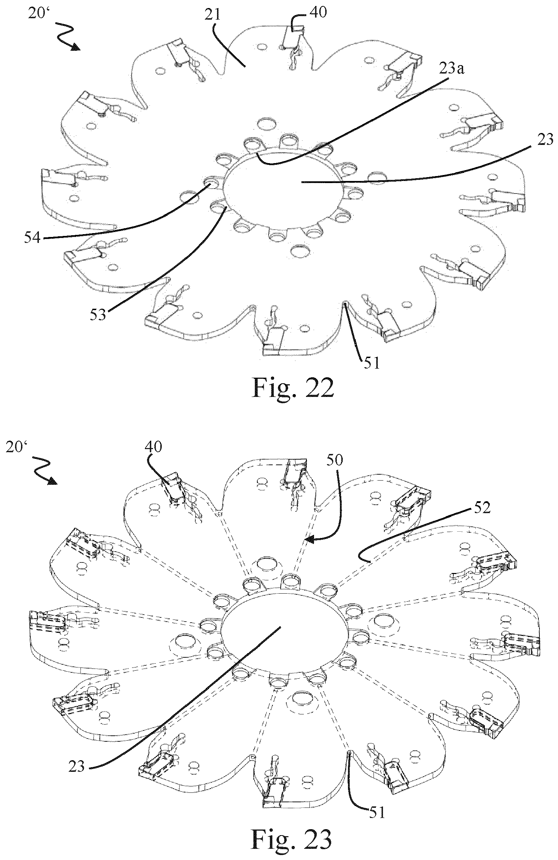

In den Fig. 22 und Fig. 23 ist eine Abwandlung des Schneidenträgers gezeigt, die ebenfalls an dem zuvor beschriebenen Grundkörper 10 zum Einsatz kommen kann.

Wie aus den Fig. 22 und Fig. 23 ersichtlich ist, unterscheidet sich der Schneidenträger 20' gemäß der Abwandlung darin von dem zuvor beschriebenen Schneidenträger 20, dass dieser eine größere Anzahl von Sitzen 25 mit daran befestigten Schneideinsätzen 40 und dementsprechend eine größere Anzahl von Kühlmittelverteilkanälen 50 aufweist. Da sich der Schneidenträger 20' ansonsten nicht von dem zuvor beschriebenen Schneidenträger 20 unterscheidet, werden dieselben Bezugszeichen verwendet und eine ausführliche Beschreibung der einzelnen Merkmale des Schneidenträgers wird nicht wiederholt.

Aufgrund der ringförmigen Ausgestaltung der gemeinsamen Kühlmittelverteilkammer 70 kann der Schneidenträger 20' gemäß der Abwandlung ohne Weiteres so an dem Grundkörper 10 eingesetzt werden, dass die Schneideinsätze 40 zuverlässig mit Kühlmittel versorgt werden.

Obwohl eine Ausführungsform beschrieben wurde, bei der die gemeinsame Kühlmittelverteilkammer 70 sowohl den schneidenträgerseitigen Abschnitt (Vertiefungen 55) als auch den ersten grundkörperseitigen Abschnitt (Rille 61) und den zweiten grundkörperseitigen Abschnitt (Freistich 62) aufweist, was eine besonders gute Kühlmittelverteilung und gleichzeitig eine einfache Herstellung ermöglicht, ist es z.B. auch möglich, nur einen dieser Abschnitte oder nur zwei dieser Abschnitte vorzusehen. Auch in diesem Fall kann das Kühlmittel über den Umfang verteilt werden.

## Patentansprüche

1. Scheibenfräser (100) mit
einem Grundkörper (10), der sich entlang einer vorgegebenen Rotationsachse (R) von einem ersten Ende (11) mit einer Schnittstelle zur Verbindung mit einem rotatorischen Antrieb zu einem freien zweiten Ende (12) erstreckt, an dem eine Anlagefläche (14) für einen scheibenförmigen Schneidenträger (20) ausgebildet ist, und
einem an dem zweiten Ende (12) befestigten scheibenförmigen Schneidenträger (20), der sich mit einer dem Grundkörper (10) zugewandten ersten Hauptoberfläche (21) an der Anlagefläche (14) abstützt, dessen Außenumfang radial von dem Grundkörper (10) hervorsteht und der eine zentrale, den scheibenförmigen Schneidenträger (20) axial durchdringende Durchgangsöffnung (23) aufweist,
wobei in dem Grundkörper (10) eine Mehrzahl von Kühlmittelzufuhrkanälen (60) zur Zuführung von Kühlmittel zu dem zweiten Ende (12) des Grundkörpers (10) ausgebildet ist, in dem scheibenförmigen Schneidenträger (20) eine Mehrzahl von Kühlmittelverteilkanälen (50) zum Zuführen von Kühlmittel zu dem Außenumfang des Schneidenträgers (20) ausgebildet ist und zumindest zwei der Mehrzahl von Kühlmittelverteilkanälen (50) von einer gemeinsamen Kühlmittelverteilkammer (70; 55, 61, 62) abzweigen, die zwischen dem Grundkörper (10) und dem scheibenförmigen Schneidenträger (20) ausgebildet ist und in die zumindest zwei der Mehrzahl von Kühlmittelzufuhrkanälen (60) münden.

2. Scheibenfräser nach Anspruch 1, wobei sich die gemeinsame Kühlmittelverteilkammer (70; 55, 61, 62) ringförmig um die Rotationsachse (R) erstreckt.

3. Scheibenfräser nach Anspruch 1 oder 2, wobei die Kühlmittelverteilkanäle (50) jeweils einen im Inneren des Schneidenträgers (20) verlaufenden ersten Kanalabschnitt (52), einen zu der Durchgangsöffnung (23) und zu der ersten Hauptoberfläche (21) offenen Eintrittsabschnitt (53) und einen den Eintrittsabschnitt (53) mit dem ersten Kanalabschnitt (52) verbindenden Verbindungsabschnitt (54) aufweisen.

4. Scheibenfräser nach Anspruch 3, wobei eine axiale Höhe des zu der Durchgangsöffnung (23) offenen Eintrittsabschnitts (53) maximal ein Drittel der Dicke des scheibenförmigen Schneidenträgers (20) an der Durchgangsöffnung (23) beträgt.

5. Scheibenfräser nach einem der Ansprüche 3 oder 4, wobei die Kühlmittelverteilkammer (70; 55, 61, 62) einen schneidenträgerseitigen Abschnitt aufweist, der durch an die erste Hauptoberfläche (21) und die Durchgangsöffnung (23) angrenzende, sich zwischen den Eintrittsabschnitten (53) der jeweiligen Kühlmittelverteilkanäle (50) erstreckende Vertiefungen (55) in dem scheibenförmigen Schneidenträger (20) gebildet ist.

6. Scheibenfräser nach Anspruch 5, wobei eine axiale Höhe des schneidenträgerseitigen Abschnitts der Kühlmittelverteilkammer (70; 55, 61, 62) höchstens ein Drittel der Dicke des scheibenförmigen Schneidenträgers (20) an der Durchgangsöffnung (23) beträgt.

7. Scheibenfräser nach einem der vorangehenden Ansprüche, wobei an dem zweiten Ende (12) des Grundkörpers (10) ein von der Anlagefläche (14) axial vorspringender Zentrierzapfen (16) ausgebildet ist und die Durchgangsöffnung (23) in dem Schneidenträger (20) an die Außenkontur des Zentrierzapfens (16) angepasst ist.

8. Scheibenfräser nach Anspruch 7, wobei sich durch den Zentrierzapfen (16) eine an dem zweiten Ende (12) offene Durchgangsbohrung (17) erstreckt.

9. Scheibenfräser nach Anspruch 7 oder 8, wobei eine Innenumfangsfläche (23a) der Durchgangsöffnung (23) des Schneidenträgers (20) abdichtend an einer Außenumfangsfläche (16a) des Zentrierzapfens (16) anliegt.

10. Scheibenfräser nach einem der Ansprüche 7 bis 9, wobei die Mehrzahl von Kühlmittelzufuhrkanälen (60) radial außerhalb des Zentrierzapfens (16) in die gemeinsame Kühlmittelverteilkammer (70; 55, 61, 62) mündet.

11. Scheibenfräser nach einem der Ansprüche 7 bis 10, wobei die Kühlmittelverteilkammer (70; 55, 61, 62) einen ersten grundkörperseitigen Abschnitt aufweist, der durch eine um den Zentrierzapfen (16) umlaufende, gegenüber der Anlagefläche (14) vertieft ausgebildete Rille (61) gebildet ist.

12. Scheibenfräser nach einem der Ansprüche 7 bis 11, wobei die Kühlmittelverteilkammer (70; 55, 61, 62) einen zweiten grundkörperseitigen Abschnitt aufweist, der durch einen an dem Zentrierzapfen (16) eingebrachten, umlaufenden Freistich (62) gebildet ist.

13. Scheibenfräser nach einem der vorangehenden Ansprüche, wobei der Schneidenträger (20) eine Mehrzahl von über den Umfang des scheibenförmigen Schneidenträgers (20) verteilten Sitzen (25) zur Aufnahme von auswechselbaren Schneideinsätzen (40) aufweist.

14. Scheibenfräser nach Anspruch 13, wobei die Sitze (25) dazu ausgebildet sind, auswechselbare Schneideinsätze (40) derart aufzunehmen, dass diese jeweils axial beidseitig von dem scheibenförmigen Schneidenträger (20) vorstehen.

15. Scheibenfräser nach Anspruch 13 oder 14 mit einer Mehrzahl von an den Sitzen (25) befestigten auswechselbaren Schneideinsätzen (40), die den axial am weitesten von dem Grundkörper (10) hervorstehenden Bereich des Scheibenfräsers bilden.
